# EUROPEAN PATENT SPECIFICATION

(11) **EP 2 986 576 B1**
(45) Date of publication and mention of the grant of the patent: **26.07.2017**
(21) Application number: 14717445.2
(22) Date of filing: 14.04.2014
(51) Int. Cl.: C03C 17/00, C03C 17/02, C03C 8/16

(54) **PROCESS FOR ENAMELLING A GLASS SHEET**
VERFAHREN ZUM GLASIEREN EINER GLASSCHEIBE
PROCÉDÉ D'ÉMAILLAGE D'UNE FEUILLE DE VERRE

(30) Priority: 18.04.2013 EP 13164323
(43) Date of publication of application: 24.02.2016
(73) Proprietor: AGC Glass Europe, 1348 Louvain-La-Neuve (BE); Asahi Glass Co., Ltd., Chiyoda-ku Tokyo 100-8405 (JP)
(72) Inventor: LEROY, Matthias, B-1400 Nivelles (BE); KUWAHARA, Yuichi, Yokohama-shi Kanagawa 230-0012 (JP)
(74) Representative: Bayot, Daisy
(86) International application number: PCT/EP2014/057489
(87) International publication number: WO 2014/170251

(56) References cited:
- EP-A1- 2 581 352
- US-A- 5 443 669

## Description

### 1. Field of the Invention

The present invention relates to a process for on-line enamelling a glass sheet. The glass sheet covered by an enamel-based coating produced by the process of the invention is temperable, if a tempering is required later. Moreover, the glass sheet produced by the process of the invention is temperable but it has significantly the same appearance if tempered later or not. In other words, the process of the invention allows producing enamelled glass sheets that do not change of appearance upon tempering and that thus could be used, on demand, as tempered product or not.

The process of the invention allows producing glass sheet covered by an enamel-based coating which may have various applications. For example, they may be used for decorative purposes for furniture, wardrobes, partitions, tables, shelves, in bathrooms, as wall covering, in outside locations, as spandrels. They may also be used for automotive glazing, e.g. for windscreens. More and more of these applications require sheets of tempered glass since such sheets have the advantage of being more resistant to rupture and to breaking.

### 2. Solutions of the Prior Art

Numerous types of glass sheets covered with an enamel-based coating and their processes are already known in the art. In particular, enamelled glass sheets that can be tempered are also known.

The product Colorbel®, a glazing with one of its faces covered with a coloured enamel, should also be cited as an example. Such a product is tempered. Nevertheless, before tempering, the enamel is not yet sinterised/vitrified and the coating does not have sufficient mechanical resistance to be enable to withstand being transported, handled, and/or stored. It is therefore necessary for this product that tempering is conducted practically immediately after production and preferably on the same production line, which constitutes a severe limitation from an industrial viewpoint. Moreover, when the glass sheet is tempered before being painted, this requires that the glass sheet already has its final dimensions, as it is not possible to cut a tempered glass sheet.

Next to that, it has also been developed off-line process for producing enamelled glass sheet which are temperable. In particular, the international application WO2007/135192A1 and WO2011/051459A1 describes a glass sheet that is covered with one or two enamel-based layer(s) comprising an increased organic content (for example, with a resin added) in order to provide to the glass sheet a better mechanical resistance to handling/transport before tempering than for the Colorbel product. This coated glass product is indeed temperable but, to obtain the final product, it must be tempered in a further step, otherwise its esthetical appearance is not satisfactory. Therefore, such a glass product has not the same appearance if tempered or not.

It is also known an on-line process for enamelling glass (in particular, a bottle) while it is hot after its forming/molding and allowing direct sinterizing/fusing of an enamel/glass frit layer. Such process is described in US3,238,053; US3,437,504 or US4,343,641 and corresponds to an electrostatic deposition of a dry powdered enamel/glass frit on hot glass. The electrostatic principle is required in this process in order to allow enamel/glass frit particles adhering to the glass. In such an electrostatic application, the particles are attracted and adheres to the surface of the glass article under the influence of a potential difference between said surface and said particles. The particles are generally forced through a nozzle and so frictionally charged. A potential difference of the order of 8 to 25kV is maintained between the glass and the particles as they emerge from the nozzle. During deposition, the glass is hot, the heating rendering the glass electrically conductive and so neutralizes the charge on the particles as they are deposited. Particles fuses/sinterises when they contact the hot glass, thereby adhering to it. However, it is known that an enamel/glass frit coating produced by this electrostatic process can still be rubbed off quite easily. Moreover, such a process is not so straightforward to implement : there are several constituent forces involved, the so-called Van der Waal's forces, the meniscus forces caused by any absorbed moisture in the surface layers of the particles, and the so-called electric double layer forces in the contact regions between individual particles. The adhesive force is in practice related to the particle size and the strength of the electric field and the applied voltage and current, amongst other factors. In particular, this process requires a powder with a fairly definite particle size distribution, preferably about 3 to 30 microns in diameter. Particles size below 3 microns are particularly objectionable. Moreover, due to the required high voltage, additionnal safety measures are needed. This electrostatic process finally also requires a very effective recycling system that allows collecting the free powder in excess, to increase process yield but above all to control dust emission in the environment of the deposition apparatus (detrimental to environment and health).

Finally, US4,343,641 also discloses a wet application of an enamel/glass frit in a water suspension but this process still need an electrostatic deposition and the drawbacks are thus substantially the same.

### 3. Objectives of the Invention

The objective of the invention in particular is to remedy the cited disadvantages resolving the technical problem, i.e. to provide a process for enamelling a glass sheet, without using the electrostatic deposition.

Another objective of the invention in at least one of its embodiments is to provide a process for enamelling a glass sheet, which is temperable and which has substantially the same appearance if tempered or not.

Another objective of the invention is to provide a process for on-line enamelling a glass sheet in a float line.

Another objective of the invention in at least one of its embodiments is to provide a process for enamelling a glass sheet, getting a good adhesion of the enamel on the glass sheet.

Finally, another objective of the invention is to provide a solution to the disadvantages to the prior art that is simple, quick and economical.

### 4. Outline of the Invention

The invention relates to a process for producing a glass sheet provided with an enamel-based coating.

According to the invention, the process comprises applying to a glass sheet a liquid composition containing :
(i) a hydrolysate of at least one metal alkoxide,
(ii) a solvent which has a boiling point of at least 180°C, and
(iii) a glass frit;
the glass sheet in the form of a ribbon issuing from a float bath, the temperature of the glass sheet when the liquid composition is applied is of at least 300°C , the enamel based coating having a thickness between 1 and 200 microns. Hence, the invention rests on a novel and inventive approach, since it enables a solution to be found for the disadvantages of enamelling processes of the prior art and the posed technical problem to be resolved. The inventors have demonstrated that it is possible, by combining an hydrolysed sol-gel matrix, a particular solvent and the typical glass frit component of enamel, to obtain a liquid composition very effective, in terms of adhesion of the final enamel coating, when applied on a hot glass sheet.

Other features and advantages of the invention will be made clearer from reading the following description of preferred embodiments given by way of simple illustrative and non-restrictive examples.

The glass according to the invention can belong to various categories. The glass can be a soda-lime silica glass, a borosilicate glass or aluminosilicate glass. The glass of the invention is preferably a soda-lime glass. It can be clear, extra-clear or coloured in the bulk. The term "soda-lime glass" is used here in its broad sense and relates to any glass that contains the following base components (expressed in percentages by total weight of the glass):

| | |
|---|---|
| SiO₂ | 60 to 75% |
| Na₂O | 10 to 20% |
| CaO | 0 to 16% |
| K₂O | 0 to 10% |
| MgO | 0 to 10% |
| Al₂O₃ | 0 to 5% |
| BaO | 0 to 2% |
| BaO + CaO + MgO | 10 to 20% |
| K₂O + Na₂O | 10 to 20%. |

According to the invention, the glass sheet is a sheet of float glass. The glass sheet is preferably a sheet of soda-lime float glass. The sheet of float glass of the invention can have a thickness varying e.g. from 0,7 to 20 mm.

The liquid composition according to the invention comprises a hydrolysate of at least one metal alkoxide. The hydrolysate of at least one metal alkoxide is obtained by hydrolysis of at least one metal alkoxide. The hydrolysate of at least one metal alkoxide according to the invention may contain unreacted/unhydrolyzed metal alkoxide.

The hydrolysis of the metal alkoxide may be carried out by using water and a catalyst. The catalyst may be an acid catalyst such as, for example, hydrochloric acid, acetic acid or nitric acid. The catalyst may be a base catalyst like ammonia, sodium hydroxide or potassium hydroxide.

The metal of the at least one metal alkoxide may be chosen from silicon, titanium, zirconium, aluminium, cerium or zinc.

Preferably, the metal alkoxide is an alkoxysilane. The alkoxysilane may, for example, be a tetraalkoxysilane (such as tetramethoxysilane, tetraethoxysilane, tetrapropoxysilane or tetrabutoxysilane), a monoalkyltrialkoxysilane (such as methyltrimethoxysilane, methyltriethoxysilane, ethyltrimethoxysilane, ethyltriethoxysilane, propyltrimethoxysilane or propyltriethoxysilane), a dialkyldialkoxysilane (such as dimethyldimethoxysilane, dimethyldiethoxysilane, diethyldimethoxysilane, diethyldiethoxysilane, dipropyldimethoxysilane or dipropyldiethoxysilane), a trialkylmonoalkoxysilane (such as trimethylmethoxysilane, trimethylethoxysilane, triethylmethoxysilane, triethylethoxysilane, tripropylmethoxysilane or tripropylethoxysilane), a monoaryltrialkoxysilane (such as phenyltrimethoxysilane or phenyltriethoxysilane), a diaryldialkoxysilane (such as diphenyldimethoxysilane or diphenyldiethoxysilane), a triarylmonoalkoxysilane (such as triphenylmethoxysilane or triphenylethoxysilane), an alkoxysilane having a perfluoropolyether group (such as perfluoropolyether triethoxysilane), an alkoxysilane having a perfluoroalkyl group (such as perfluoroethyltriethoxysilane), an alkoxysilane having a vinyl group (such as vinyltrimethoxysilane or vinyltriethoxysilane), an alkoxysilane having an epoxy group (such as 2-(3,4-epoxycyclohexyl)ethyltrimethoxysilane, 3-glycidoxypropyltrimethoxysilane, 3-glycidoxypropylmethyldiethoxysilane or 3-glycidoxypropyltriethoxysilane) or an alkoxysilane having an acryloyloxy group (such as 3-acryloyloxypropyltrimethoxysilane). According to this embodiment, the alkoxysilane is more preferably a tetraalkoxysilane, more preferably tetraethoxysilane or tetramethoxysilane, because of their high hydrolysis rate and the high productivity.

The liquid composition according to the invention comprises a solvent which has a boiling point (Bp) of at least 180°C. Preferably, the solvent has a boiling point of at least 200°C. More preferably, the solvent has a boiling point of at least 220°C or even of at least 240°C or of at least 280°C. Such values of boiling point for the solvent used in the composition allows getting a better adhesion of the enamel on the glass sheet. Better results have been obtained with solvents with a boiling point of at least 300°C.

According to a preferred embodiment, the solvent of the invention is a polar solvent. By polar solvent, it is intended a solvent consisting of molecules having at least one polarized chemical bond, or, in other words, a solvent consisting of molecules having a resulting dipole moment different from zero.

According to an embodiment, the solvent may be chosen from polyethers with at least one hydroxyl (OH) end group. For example, the solvent may be chosen from polyethers with two hydroxyl (OH) end groups (glycol ethers) like diethylene glycol (DiEG, Bp : 245.8°C), triethylene glycol (TriEG, Bp : 285°C), tetraethylene glycol (TetraEG, Bp : 328°C), pentaethylene glycol (PentaEG), dipropylene glycol (DiPG, Bp : 230.5°C), tripropylene glycol (TriPG, Bp : 268°C), and polyethylene glycols with molar mass of at least 300. For example, the solvent may be chosen from polyethers with one hydroxyl (OH) end group (glycol monoalkyl ether) like diethylene glycol monomethyl ether (2-(2-methoxyethoxy)ethanol, Bp : 193°C), diethylene glycol monoethyl ether (2-(2-ethoxyethoxy)ethanol, Bp : 196°C), dipropylene glycol monomethyl ether (Bp : 188.3°C) and tripropylene glycol monomethyl ether (Bp : 241.3°C).

According to another embodiment, the solvent may be chosen from alcohols. By alcohol, it is intended a compound with one hydroxyl group.

According to still another embodiment, the solvent may be chosen from polyalcohols (or glycol or polyols). By polyalcohol, it is intended a compound with at least two hydroxyl groups. For example, the solvent may be chosen from glycerol (Bp : 290°C) and its derivatives, ethylene glycol (EG, Bp : 197.3°C), 1,2-propanediol (Bp : 187.6°C), isomers of butylene glycol (1,2-Butanediol - Bp : 190.5°C / 1,3-Butanediol - Bp : 207.5°C / 1,4-Butanediol - Bp : 235°C / 2,3-Butanediol - Bp : 182,5°C), pentylene glycol (1,5-pentanediol, Bp : 239°C), hexylene glycol, erythritol and pentaerythritol.

Preferably, the solvent is chosen from polyethers with at least one hydroxyl (OH) end group or polyalcohols. More preferably, the solvent is chosen from polyethers with at least one hydroxyl (OH) end group. Triethylene glycol and tetraethylene glycol, particularly tetraethylene glycol, have given very good results in terms of adhesion.

The liquid composition according to the invention comprises a glass frit. By glass frit, it is understood an inorganic components mixture that fuses and at relatively low temperature, sinterises thus bonding the final coating to the glass sheet. Glass frit comprises usually a mixture of oxides generally chosen from zinc, lead, silicon, titanium, zirconium, sodium, boron, bismuth, lithium, potassium, calcium, aluminum, tin, vanadium, molybdenum, magnesium, iron and manganese oxides. Glass frit in the present invention may be an usual, commercial glass frit.

According to an embodiment, the liquid composition comprises at least one pigment. A pigment is a colouring insoluble inorganic/mineral component. The nature and number of pigment(s) added to the liquid composition depends on the colour searched and/or the intensity required. Mention may be made of pigments which may be used, alone or in combination, in the liquid composition of the invention: NiO (green), Cr₂O₃ (green), TiO₂ (white), and/or oxides such as the Cr-Al spinel (pink), the Sn-Sb-V rutile (grey), the Ti-Sb-Ni rutile (yellow), the Zr-V baddeleyite (yellow), the Co-Zn-Al spinel (blue), the Zn-Fe-Cr spinel (brown), and/or silicates such as the Ca-Cr-Si garnet (green), the Co-Zn-Si willemite (dark blue), and/or the Co-Si olivine (dark blue), or even black pigments based on maganese, iron and/or cobalt oxides. According to this embodiment, the glass frit and pigment(s) may be added to the other mandatory (and optional) components of the liquid composition as a commercial enamel. A commercial enamel generally comprises (i.e. before applying on a substrate) a solid powder formed from inorganic pigments and a glass frit in suspension in a medium (generally a resin) often comprising water and/or solvent(s). Alternatively, the glass frit and pigment(s) may be added to the other mandatory (and optional) components of the liquid composition as independent powders.

According to an embodiment, the solid content of the liquid composition (the total amount of the glass frit and pigment(s) if present) is from 0.5 to 80 wt% of the total weight of the liquid composition. Preferably, the solid content of the liquid composition is from 1 to 70 wt% of the total weight of the liquid composition, more preferably from 1 to 50 wt%.

According to another embodiment, the liquid composition may comprise optional components like, for instance, one or more other solvent(s) that according to the invention, surfactants, ...

The temperature of the glass sheet when the liquid composition is applied is of at least 300°C. In the description, by temperature of the glass sheet, it is meant the temperature on the side where the liquid composition is applied. When the glass sheet has a temperature within such a range:
(i) the hydrolysate of the metal alkoxide is fired and converted to the corresponding oxide;
(ii) the solvent evaporates and
(iii) the glass frit sinterises/melts;

leaving finally (when coated glass sheet is cooled down) a solid enamel coating, which is mechanically resistant and has a good adhesion to the glass substrate.

Preferably, the temperature of the glass sheet when the liquid composition is applied is from 300 to 750°C. More preferably, it is from 450°C to 750°C. The liquid composition is applied on the glass sheet in the form of a continuous ribbon obtained by forming molten glass in a float bath, between the float bath and an annealing step or during the annealing step at a position where the glass is within the temperature range according to the invention. This allows the process of the invention to be implemented on-line and allows using the heat coming from the float process. During the float process, the temperature of the glass ribbon at a position immediately after the float bath is usually at around 600-650°C. The glass ribbon which has left the float bath is annealed in the annealing step and usually cooled to 400°C or lower.

The step of applying the liquid composition is preferably carried out by spraying by means of at least one nozzle. Such a spraying method allows getting a good production efficiency. According to this embodiment, the spraying may be done :
(i) while the nozzle(s) is(are) moved above the fixed glass sheet; or
(ii) from fixed nozzle(s) while glass sheet is moving in one direction; or
(ii) by a combination of option (i) and (ii), while nozzle(s) and glass sheet are moving.

Option (ii) and (iii) are adapted, for example, when the step of applying the liquid composition is carried out on the glass sheet in the form of a continuous ribbon obtained by forming molten glass in a float bath.

The process of the invention may be repeated more than once on the glass sheet, with the same conditions or with different conditions (nature of the liquid composition, temperature, ...), producing a glass sheet with several enamel-based coatings. This embodiment may be advantageous to adapt/fine-tune the aesthetical result of the final product (for example, to accentuate/nuance colour, to reach opacity, ...).

The term "enamel-based coating" in the invention is used here for an enamel that has been sintered (thus containing substantially only the fused glass frit and pigment(s) if present).

According to an embodiment, the enamel-based coating extends continuously over substantially the entire surface of the glass sheet. Over substantially the entire surface of the glass sheet is understood to mean over at least 90% of said surface. The enamel-based coating preferably extends continuously over at least 95% of the surface. According to an alternative embodiment, the enamel-based coating partially covers the surface of the glass sheet. The enamel-based coating obtained by the process of the invention has a thickness in the range of between 1 and 200 microns. Coating thickness is understood to mean the average geometric thickness here. If the thickness of the coating is too low, this can cause an enamelled glass sheet that does not have the desired aesthetics; if it is too high, the adhesion could be lower and above all, it will become more expensive without significant positive effect.

According to an embodiment, the enamel-based coating obtained by the process of the invention is preferably in direct contact with the glass sheet. Alternatively, there may be one of more other coating(s) between the glass sheet and the enamel-based coating.

According to the invention, the enamel-based coating obtained on the glass sheet can be opaque or translucent. Opaque is understood to mean that the light transmission of the glass sheet is lower than 5%. The enamel-based coating is also preferably coloured (when opaque or translucent), including white and black (this is the case when the liquid composition comprises at least one pigment).

Enamelled glass sheets obtained by the process according to the invention may be tempered later. If the enamelled glass sheet is tempered later, it has preferably and advantageously the same appearance (i.e., the same colour) than before tempering.

Enamelled glass sheets obtained by the process according to the invention can have varied applications. These sheets can be used, for example, for decorative applications, single- or double-sided, decorative purposes for furniture, wardrobes, partitions, tables, shelves, in bathrooms, as wall covering, in outside locations such as spandrels. They can also be used for automotive applications such as windscreens, e.g. if the enamel-based coating is applied around the periphery of the glass sheet.

Embodiments of the invention will now be further described, by way of examples only, together with some comparative examples, not in accordance with the invention. The following examples are provided for illustrative purposes, and are not intended to limit the scope of this invention.

### Examples

Examples 8, 11-13 are comparative examples, and Examples 1-7, 9-10 are examples according to the invention.

Coverage : As an indication of the deposition efficiency, the coverage of the enamel on the glass substrate was observed and estimated by eyes.

Adhesion : Adhesion of the layer on the glass was checked by felt abrasion test, following EN-1096-2 standard. Abrasion is done by a felt of 12mm diameter, which is doing a rotation and translation movement of 100mm length. 100 abrasion strokes were realized with a pressure weight of 1.2kg. After abrasion, it was visually checked if the coating remains on the glass or not.

Haze : As an indication of light scattering, the haze of the glass sheet provided with an enamel-based coating was measured by means of a haze meter (Haze-gard plus model E-4725, manufactured by BYK-Gardner).

### Examples 1 to 7:

To a solvent shown in Table 1, tetraethoxysilane (TEOS, manufactured by Kanto Chemical Co., Inc., solid content based on SiO₂: 99.9 mass%) was added so that its concentration would become 40 mass% in the solution, and nitric acid (70 mass% aqueous solution) was further added so that its concentration would become 0.21 mass% in the solution, followed by stirring for 1 hour. Then, a commercial enamel (either white : TDF9070AAL-O n°1343724, or black : TDF9070AAL-O n°1343723, both manufactured by Ferro Gmbh) was added so that its concentration would become 10 or 20 mass% in the solution, followed by stirring for 5 to 60 minutes to obtain the liquid composition.

A glass sheet (highly transparent glass manufactured by Asahi Glass Company, Limited of 10 cm x 10 cm x 4 mm) was placed on a stage, and a heater was provided on the rear side of the stage without being in contact with the stage. The glass sheet was heated to 600°C via the stage by the radiant heat of the heater. The temperature of the glass sheet was measured by bringing a thermocouple in contact with a side surface of the glass sheet. Since the glass sheet was heated for a sufficient time before the liquid composition was sprayed, the temperature measured at this position can be considered to be substantially the same as the surface temperature of the glass sheet.

After the glass sheet was heated to 600°C, the liquid composition was sprayed over the glass sheet from a spray gun provided above the glass substrate. The application apparatus used was a KM-100, manufactured by SPD Laboratory Inc. When the liquid composition was applied, the liquid-sending pressure to the spray gun was adjusted so that the liquid-sending rate would be from 0.3 to 0.9 mL/sec, and the spraying pressure was set to be 1 MPa. The application time was 15 seconds. Spraying was carried out in a state where the stage, the glass sheet and the spray gun were surrounded by an explosion-proof apparatus, and the ambient temperature was not adjusted.

The estimated coverage, adhesion and haze of the obtained glass sheets provided with an enamel-based coating are shown in Tables 1 and 2.

**Table 1**

| **Ex.** | **Solvent** | **Bp (°C)** | **Enamel / Wt%** | **Coverage (%)** | **Adhesion** | **Haze (%)** |
|---|---|---|---|---|---|---|
| **1** | Ethylene glycol | 197.3 | Black / 10 | 10 | Yes | -- |
| **2** | Diethylene glycol | 245.8 | Black / 10 | 15 | Yes | 22 |
| **3** | Triethylene glycol | 285 | Black / 10 | 75 | Yes | 70 |
| **4** | Triethylene glycol | 285 | White / 10 | 75 | Yes | 46 |
| **5** | Tetraethylene glycol | 328 | Black / 10 | 100 | Yes | 100 |
| **6** | Tetraethylene glycol | 328 | White / 10 | 100 | Yes | 100 |
| **7** | Tetraethylene glycol | 328 | Black / 20 | 100 | Yes | 100 |

In Examples 1 to 7, solvent with a boiling point higher than 180°C (polyethers with at least one OH end group) were used and the enamel-based coating produced show a good adhesion to the glass sheet. The coverage is also very good (and even of 100% for TetraEG) and could be optimized easily if required (for example, while increasing application time).

### Examples 8 to 10:

Glass sheets provided with an enamel-based coating were obtained in the same manner as in Examples 1 to 7 with black enamel (10 wt%) except that the temperature of the glass sheet was fixed at 400 or 500°C instead of 600°C.

The estimated coverage, adhesion and haze of the obtained glass sheets provided with an enamel-based coating are shown in Table 2.

**Table 2**

| **Ex.** | **Temp. of glass sheet** | **Solvent** | **Bp (°C)** | **Coverage (%)** | **Adhesion** | **Haze (%)** |
|---|---|---|---|---|---|---|
| **8 (comp)** | 400 | Water | 100 | 80 | No | -- |
| **9** | 500 | Triethylene glycol | 285 | 100 | Yes | 100 |
| **10** | 500 | Tetraethylene | 328 | 100 | Yes | 100 |

### Examples 11 to 13 (comparative)

Glass sheets provided with an enamel-based coating were obtained in the same manner as in Examples 1 to 7 with white enamel (10 wt%) except that no metal alkoxide and no nitric acid was added. The liquid composition is only a mixture of a commercial enamel in a solvent.

The estimated coverage, adhesion and haze of the obtained glass sheets provided with an enamel-based coating are shown in Table 3.

**Table 3**

| **Ex.** | **Solvent** | **Bp (°C)** | **Enamel** / **Wt%** | **Coverage (%)** | **Adhesion** | **Haze (%)** |
|---|---|---|---|---|---|---|
| **11** | DMF | 153 | White / 10 | Very low Estim. <1% | No | <1 |
| **12** | Water | 100 | White / 10 | Very low Estim. <1% | No | <1 |
| **13** | Tetraethylene glycol | 328 | White / 10 | Very low Estim. <1% | No | <1 |

## Claims

1. Process for producing a glass sheet provided with an enamel-based coating, which comprises applying to a glass sheet a liquid composition comprising :
(i) a hydrolysate of at least one metal alkoxide,
(ii) a solvent which has a boiling point of at least 180°C; and
(iii) a glass frit;
the glass sheet in the form of a ribbon issuing from a float bath, the temperature of the glass sheet when the liquid composition is applied is of at least 300°C, the enamel based coating having a thickness between 1 and 200 microns.

2. Process according to claim 1, **characterised in that** the solvent is polar.

3. Process according to any of the preceding claims, **characterised in that** the solvent is chosen from polyethers with at least one hydroxyl (OH) end group or from polyalcohols.

4. Process according to the preceding claim, **characterised in that** the solvent is chosen from polyethers with at least one hydroxyl (OH) end group.

5. Process according to any of the preceding claim, **characterised in that** the solvent has a boiling point of at least 200°C.

6. Process according to the preceding claim, **characterised in that** the solvent has a boiling point of at least 220°C.

7. Process according to the preceding claim, **characterised in that** the solvent has a boiling point of at least 240°C.

8. Process according to the preceding claim, **characterised in that** the solvent has a boiling point of at least 280°C.

9. Process according to any of the preceding claim, **characterised in that** the liquid composition comprises at least one pigment.

10. Process according to any of the preceding claim, **characterised in that** the metal of the at least one metal alkoxide is chosen from silicon, titanium, zirconium, aluminium, cerium or zinc.

11. Process according to the preceding claim, **characterised in that** the at least one metal alkoxide is an alkoxysilane.

12. Process according to any of the preceding claim, **characterised in that** the step of applying the liquid composition is carried out by spraying by means of at least one nozzle.

## Patentansprüche

1. Verfahren zur Herstellung einer Glasscheibe, die mit einer emailbasierten Beschichtung versehen ist, bei dem man auf eine Glasscheibe eine flüssige Zusammensetzung, die
(i) ein Hydrolysat mindestens eines Metallalkoxids,
(ii) ein Lösungsmittel mit einem Siedepunkt von mindestens 180°C und
(iii) eine Glasfritte
umfasst, aufbringt; die Glasscheibe in Form eines aus einem Floatbad kommenden Bands vorliegt, die Temperatur der Glasscheibe beim Aufbringen der flüssigen Zusammensetzung mindestens 300°C beträgt, wobei die emailbasierte Beschichtung eine Dicke zwischen 1 und 200 Mikron aufweist.

2. Verfahren nach Anspruch 1, **dadurch gekennzeichnet, dass** das Lösungsmittel polar ist.

3. Verfahren nach einem der vorhergehenden Ansprüche, **dadurch gekennzeichnet, dass** das Lösungsmittel aus Polyethern mit mindestens einer Hydroxyl(OH)-Endgruppe oder aus Polyalkoholen ausgewählt ist.

4. Verfahren nach dem vorhergehenden Anspruch, **dadurch gekennzeichnet, dass** das Lösungsmittel aus Polyethern mit mindestens einer Hydroxyl(OH)-Endgruppe ausgewählt ist.

5. Verfahren nach einem der vorhergehenden Ansprüche, **dadurch gekennzeichnet, dass** das Lösungsmittel einen Siedepunkt von mindestens 200°C aufweist.

6. Verfahren nach dem vorhergehenden Anspruch, **dadurch gekennzeichnet, dass** das Lösungsmittel einen Siedepunkt von mindestens 220°C aufweist.

7. Verfahren nach dem vorhergehenden Anspruch, **dadurch gekennzeichnet, dass** das Lösungsmittel einen Siedepunkt von mindestens 240°C aufweist.

8. Verfahren nach dem vorhergehenden Anspruch, **dadurch gekennzeichnet, dass** das Lösungsmittel einen Siedepunkt von mindestens 280°C aufweist.

9. Verfahren nach einem der vorhergehenden Ansprüche, **dadurch gekennzeichnet, dass** die flüssige Zusammensetzung mindestens ein Pigment umfasst.

10. Verfahren nach einem der vorhergehenden Ansprüche, **dadurch gekennzeichnet, dass** das Metall des mindestens einen Metallalkoxids aus Silicium, Titan, Zirconium, Aluminium, Cer oder Zink ausgewählt ist.

11. Verfahren nach dem vorhergehenden Anspruch, **dadurch gekennzeichnet, dass** es sich bei dem mindestens einen Metallalkoxid um ein Alkoxysilan handelt.

12. Verfahren nach einem der vorhergehenden Ansprüche, **dadurch gekennzeichnet, dass** der Schritt des Aufbringens der flüssigen Zusammensetzung durch Sprühen mit Hilfe mindestens einer Düse durchgeführt wird.

## Revendications

1. Procédé pour la production d'une feuille de verre pourvue d'un revêtement à base d'émail, qui comprend l'application sur une feuille de verre d'une composition liquide comprenant :
(i) un hydrolysat d'au moins un alcoxyde métallique,
(ii) un solvant qui a un point d'ébullition d'au moins 180°C ; et
(iii) une fritte de verre ;
la feuille de verre sous la forme d'un ruban étant issue d'un bain de flottage, la température de la feuille de verre lorsque la composition liquide est appliquée étant d'au moins 300°C, le revêtement à base d'émail ayant une épaisseur comprise entre 1 et 200 micromètres.

2. Procédé selon la revendication 1, **caractérisé en ce que** le solvant est polaire.

3. Procédé selon l'une quelconque des revendications précédentes, **caractérisé en ce que** le solvant est choisi parmi les polyéthers portant au moins un groupe terminal hydroxyle (OH) ou parmi les polyols.

4. Procédé selon la revendication précédente, **caractérisé en ce que** le solvant est choisi parmi les polyéthers portant au moins un groupe terminal hydroxyle (OH).

5. Procédé selon l'une quelconque des revendications précédentes, **caractérisé en ce que** le solvant a un point d'ébullition d'au moins 200°C.

6. Procédé selon la revendication précédente, **caractérisé en ce que** le solvant a un point d'ébullition d'au moins 220°C.

7. Procédé selon la revendication précédente, **caractérisé en ce que** le solvant a un point d'ébullition d'au moins 240°C.

8. Procédé selon la revendication précédente, **caractérisé en ce que** le solvant a un point d'ébullition d'au moins 280°C.

9. Procédé selon l'une quelconque des revendications précédentes, **caractérisé en ce que** la composition liquide comprend au moins un pigment.

10. Procédé selon l'une quelconque des revendications précédentes, **caractérisé en ce que** le métal de l'au moins un alcoxyde métallique est choisi entre le silicium, le titane, le zirconium, l'aluminium, le cérium ou le zinc.

11. Procédé selon la revendication précédente, **caractérisé en ce que** l'au moins un alcoxyde métallique est un alcoxysilane.

12. Procédé selon l'une quelconque des revendications précédentes, **caractérisé en ce que** l'étape d'application de la composition liquide est effectuée par pulvérisation au moyen d'au moins une buse.
